# EUROPEAN PATENT SPECIFICATION

(11) **EP 1 051 863 B1**
(45) Date of publication and mention of the grant of the patent: **27.04.2005**
(21) Application number: 99900209.0
(22) Date of filing: 04.01.1999
(51) Int. Cl.: H04Q 3/00, H04M 3/42

(54) **SPECIAL SITUATION IN INTELLIGENT NETWORK THAT IS FAILED FOR THE SERVICE BUT SUCCESSFUL FOR THE SWITCHING POINT**
SPEZIELLE SITUATION IN EINEM INTELLIGENTEN NETZ MIT FEHLSCHLAGENDEM DIENST ABER EROLGREICH FÜR DEN VERMITTLUNGSPUNKT
SITUATION SPECIALE DANS UN RESEAU INTELLIGENT QUI EST EN ECHEC POUR LE SERVICE MAIS EN REUSSITE POUR LE POINT DE COMMUTATION

(30) Priority: 05.01.1998 FI 980015
(43) Date of publication of application: 15.11.2000
(73) Proprietor: Nokia Corporation, 02150 Espoo (FI)
(72) Inventor: TUUNANEN, Heikki, FIN-02610 Espoo (FI); KORHONEN, Aki, FIN-00200 Helsinki (FI)
(74) Representative: Äkräs, Tapio Juhani
(86) International application number: PCT/FI1999/000002
(87) International publication number: WO 1999/035860

(56) References cited:
- EP-A2- 0 740 480
- US-A- 5 533 106
- US-A- 5 592 541

## Description

### BACKGROUND OF THE INVENTION

The invention relates to services that are produced by means of an intelligent network and more particularly to services in which a situation that is failed for the service is successful for the actual network.

An intelligent network (IN) is able to provide a subscriber of a telecommunications network, such as a wired network or a mobile telephone network, with a plurality of various services. Such services include a virtual private network (VPN) which enables the use of private numbers, and a personal number in which the intelligent network reroutes the calls directed to a personal number in a manner controlled by the subscriber. An example of such an intelligent network is described in recommendations of the International Telecommunications Union (ITU-T) Q-1200 series. In the following, the invention and its background will be described by the terminology of recommendation ETS 300 374-1 CoreiNAP, but the invention can also be used in intelligent networks implemented according to other intelligent network standards. Within the scope of the present application, the concept intelligent network also refers to other application platforms which provide similar types of services.

In the intelligent network, connection arrangements are separated from service control so as to provide intelligent network services which are independent of the connection arrangements. The equipment or network element carrying out the tasks determined by a service control function or service control functions (SCF) in the intelligent network is called a service control point (SCP). Within the scope of the present application, SCF and SCP are equal, and will hereinafter be called SCP. The SCP gives call set-up instructions to the exchange, or the exchange may inquire call set-up instructions from the SCP. Exchanges responsible for an intelligent network interface are called service switching points (SSP). They contain at least a service switching function (SSF) and a call control function (CCF). The call control function CCF is not a service associated with the intelligent network, but it is a standard function in exchanges, comprising high-level call handling functions of an exchange, such as setting up and releasing transfer connections. The service switching function SSF is an interface between the call control function CCF and the service control point SCP. Within the scope of this invention, the service switching point and the functional entity formed of the CCF and SSF are equal, and will hereinafter be called SSP.

In the conventional call set-up which takes place without the help of the intelligent network, telephone exchanges make independently all deductions associated with call routing. In the intelligent network, the SCP also makes deductions associated with the routing. A basic call state model (BCSM), defined in connection with the intelligent network, describes different phases of call control and includes the points at which the call control can be interrupted in order to start an intelligent network service. When the SSP detects that a call requires an intelligent network service, it interrupts call processing and contacts the service control point which invokes a logic program associated with the service. Upon invocation of the logic program, a service logic entity or service logic entities are created for the call, and their function determines the instructions which are transmitted by the SCP to the SSP at each call phase. Service logic defines the detection points in the call and connection process at which the service logic entities can have an interactive relationship with basic call and connection control features. Call set-up or call release can be temporarily interrupted at the SSP at these detection points and further call handling instructions can be requested from the service control point SCP. The SSP interprets the instructions obtained and starts the required call control functions. If the service switching point SSP succeeds in carrying out the functions according to the instruction it received, then call set-up proceeds to the next phase, and no further instructions concerning the previous phase are requested from the SCP.

It is a problem in the above arrangement that situations which are failed for a service are successful for a switching point. In these situations the switching point continues call processing without requesting additional instructions, although the situation failed for the service. An example of such a service is a call list service, the purpose of which is to reach the subscriber. However, the call may be directed to a voice mailbox, in which case the situation is successful for the switching point but failed for the service.

### BRIEF DESCRIPTION OF THE INVENTION

An object of the invention is to solve the above problem and provide a method and equipment implementing the method so as to solve the above problem. The objects of the invention are achieved by a method which is characterized by defining for the service at least one special situation which is failed for the service but successful for the switching point, defining an instruction for said at least one special situation, receiving at the detection point a message indicating the existence of the call-related service for which the special situation has been defined, receiving at the switching point a first routing instruction either from a caller or the control point, checking said first routing instruction, detecting the special situation if the first routing instruction includes the special situation, and following said instruction in response to the detection of the special situation.

The invention further relates to a method which is characterized by defining an interrupt character by means of which the caller of the call that activated the service is able to indicate a special situation which is failed for the caller but successful for the switching point, receiving the interrupt character at the switching point, detecting the special situation in response to the received interrupt character, requesting a second routing instruction in response to the detection of the special situation, and transferring call control to the service control point.

The invention further relates to an intelligent network in which the methods of the invention can be applied. The intelligent network of the invention is characterized in that at least one special situation is defined for the service, it being failed for the service but successful for the switching point, an instruction has been defined for said at least one special situation, and the service switching point is arranged to detect the special situation and follow said instruction in response to the special situation.

The invention further relates to a service switching point of an intelligent network, suitable for use in the methods and intelligent network of the invention. The intelligent network service switching point of the invention is characterized in that the switching point comprises memory means for storing at least one definition for a special situation and its instruction for at least one service, the special situation being failed for the service but successful for the switching point, checking means for checking if the received routing instruction leads to a special situation, and function means responsive to the checking means for carrying out the operation of the instruction.

The invention further relates to a service control point of an intelligent network, suitable for use in the methods and intelligent network of the invention. The intelligent network service control point of the invention is characterized in that for a control point service is defined at least one special situation which is failed for the service but successful for connection set-up, the control point comprises reception means for receiving a situation message indicating the special situation, and management means are arranged to give new connection set-up instructions in response to the situation message.

The basic idea of the invention is to detect a service-related special situation and, as distinct from the prior art, to act in the special situation in a way that is suitable for the special situation and the service, such as inquire the caller in connection with a call list service if (s)he wishes her/his call to be connected to a voice mailbox. An advantage of this is that the service is able to influence the action that is taken in the special situation, whereby the objective of the service is achieved in the best possible way.

In a preferred embodiment of the invention, a special situation is detected not until a special character dialled by a caller is received. An advantage of this is that it also provides an opportunity to react to special situations on occasions in which the service switching point has not detected a special situation, because the voice mailbox is located in another exchange, for example, to which the switching point is connected via a telephone network, and the switching point is therefore unable to detect the special situation. In addition, it is an advantage of the embodiment that the caller her/himself is able to define a special situation, i.e. a situation in which the caller feels that (s)he has not reached her/his objective.

In a preferred embodiment of the invention, new instructions are requested in a special situation. An advantage of this is that the service gives further instructions by taking into account the instructions obtained from a subscriber of the service, for instance. The service may even request instructions from the caller, even though (s)he would not be the subscriber of the service. The caller is thus able to decide if (s)he wishes to leave a message in the voice mailbox or if (s)he wishes to still try to reach the called party, i.e. subscriber B, for example.

In a preferred embodiment of the invention, the service control point notifies the switching point that checking the special situation is no longer necessary. An advantage of this is that it is possible to change a service in the middle of a call to a service not having a special situation and to accept routing that leads to a special situation, in case no other routings exist. For example, routing to the voice mailbox is accepted in the call list service not until all other voice mailbox numbers have been gone through.

In a preferred embodiment of the invention, an instruction for a special situation is defined at the service switching point, as a result of which unnecessary signalling is avoided between the control point and the switching point. This is especially an advantage in special situations in which releasing the connection is more meaningful for the service than routing the call.

The preferred embodiments of the methods, intelligent network, service switching point and service control point of the invention are disclosed in the attached dependent claims.

### LIST OF FIGURES

In the following, the invention will be described in more detail by means of preferred embodiments with reference to the accompanying drawings, in which
Figure 1 illustrates a telecommunication system utilizing an intelligent network,
Figure 2 shows a flow diagram of a first preferred embodiment of the invention,
Figure 3 shows a flow diagram of a second preferred embodiment of the invention,
Figure 4 illustrates an intelligent network switching point of the invention, and
Figure 5 illustrates an intelligent network control point of the invention.

### DETAILED DESCRIPTION OF THE INVENTION

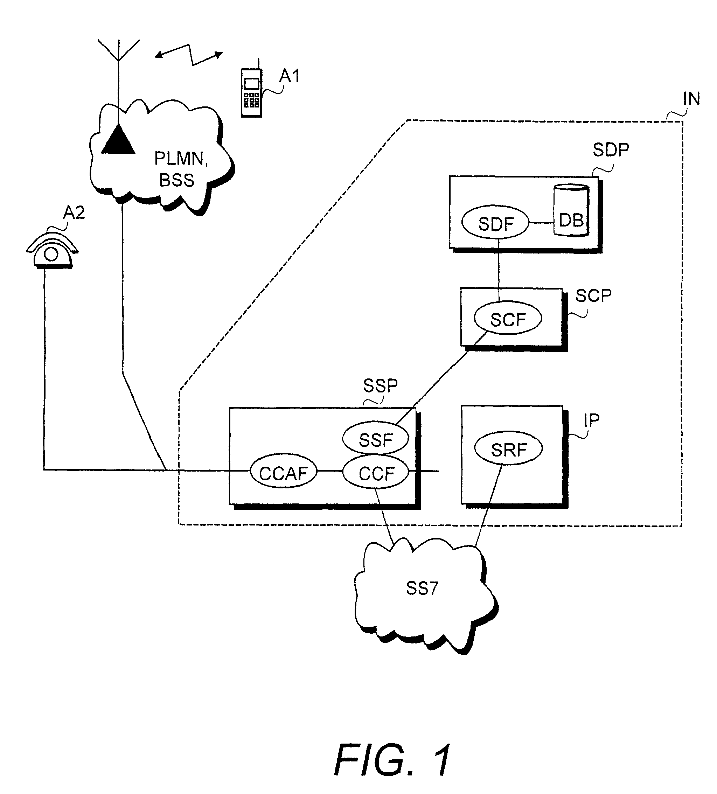

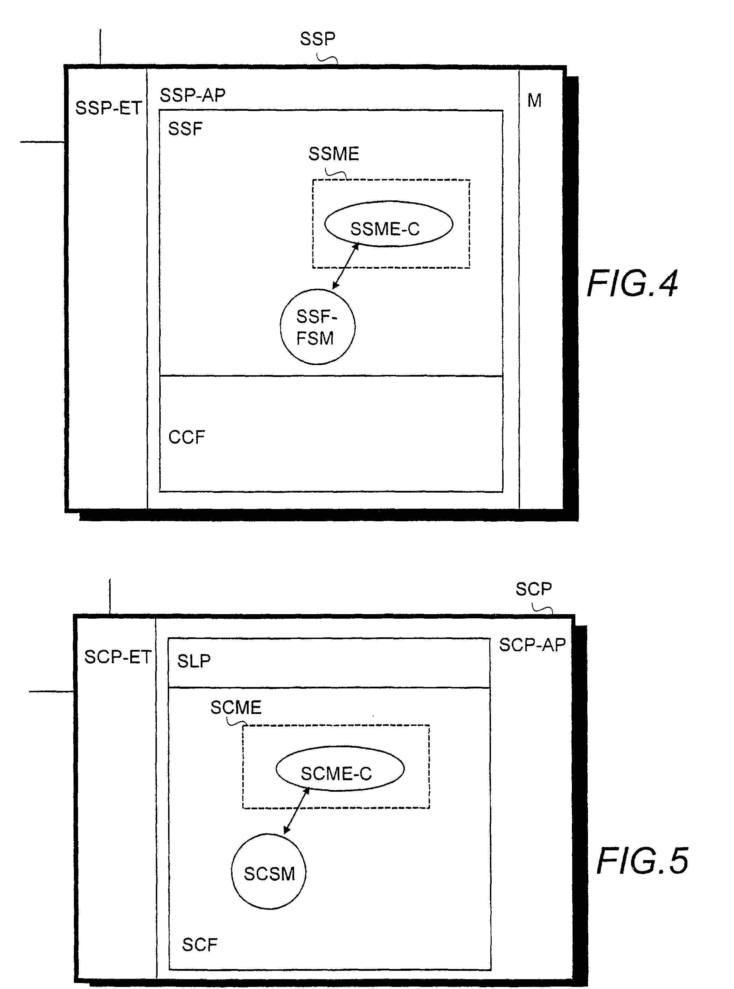

Figure 1 shows a telecommunication system utilizing an intelligent network IN. Figure 1 shows elements and functions essential to intelligent network services. Network elements which comprise a service switching function SSF and a call control function CCF are called service switching points. The call control function CCF is not a function associated with the intelligent network, but a standard function in exchanges, comprising high-level call handling functions of an exchange, such as setting up and releasing transfer connections. The service switching function SSF is an interface between the call control function CCF and a service control function SCF. The SSF interprets requests transmitted by the SCF and forwards them to the CCF which invokes call control functions required by them. Correspondingly, the call control function CCF uses the SSF for requesting instructions from the SCF. The SSF is tightly coupled to the CCF and functions as an interface for the CCF. Consequently, each SSF is located in the same exchange together with the CCF. The service switching point of the invention is described in more detail in connection with Figure 4. The service switching point SSP shown in Figure 1 is a telephone exchange which comprises, besides the CCF and the SSF, a call control agent function (CCAF) providing users, i.e. callers A1, A2, with access to the network. Since the SSP comprises the CCAF, the SSP may be a local exchange of a fixed network or a mobile services switching centre which controls a base station subsystem BSS of a mobile telephone network PLMN, for instance. The terminal of the user may therefore be a telephone, a private branch with telephones or a mobile station communication over an air interface and including equipment supporting it.

Network elements which include the service control function SCF are called service control points SCP. The service control function is a centralized authority in the intelligent network and comprises an execution environment for service logic programs, for instance. A service logic program is invoked at the service control point SCP in connection with an intelligent network service. The operation of the service logic program determines the instructions which are transmitted to the SSP by the SCP at each phase of the call in messages, or operations, between the service switching point and the service control point. The service control point of the invention is described in more detail in Figure 5. The service control point SCP presented in Figure 1 is a simplified version of the service control point, comprising only the service control function SCF and the necessary interfaces.

A service data function (SDF) is a database used by the SCF. The service logic programs may inquire and update SDF data. For example, subscriber-specific or service-number-specific data can be stored in the SDF. The SDF may be either a database management system at the service control point SCP or it may be a separate service data point (SDP) as shown in Figure 1, supporting an SCF-SDF interface and including a database DB.

A specialized resource function (SRF) of an intelligent network is an interface for network mechanisms which are associated with interaction with the subscriber. The SRF may be associated with intelligent peripherals (IP) as presented in Figure 1 and it comprises more advanced speech handling functions than do the exchanges, or it may be located at the service switching point SSP.

Several service switching points SSP may be connected to one service control point SCP and, correspondingly, one service switching point SSP may be connected to several service control points SCP. For improving the reliability and dividing the load in the network, Several SCPs may contain the same service logic program and data, or a connection to the same data.

Some network nodes comprise a combined service switching point SSP and service control point SCP. Such a network node is called a service switching and control point (SSCP). It includes the functions of both the SSP and the SCP and therefore produces similar services than do the corresponding separate points together.

In the telecommunication system of Figure 1, the network elements are connected to one another via a signalling network SS7. Other networks, such as ISDN, can also be used.

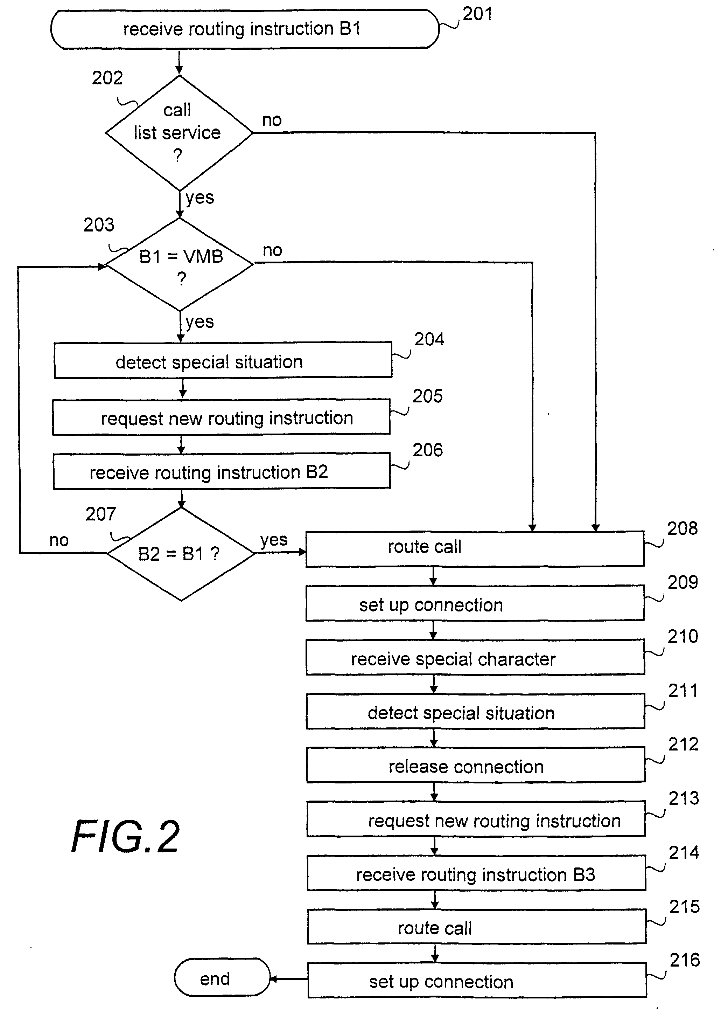

Figure 2 shows a flow diagram of a first preferred embodiment of the invention at a service switching point SSP. In the first preferred embodiment of the invention it is assumed that instead of a call release command, a routing command is obtained from a service control point. In addition, it is assumed that connection set-up is successful, i.e. the call will be answered. A call list service is used as an example of a service. A special situation defined for it is a situation in which the call is routed to a voice mailbox (VMB) and an instruction in the special situation is defined to be to request a new routing instruction which automatically transfers call control from the switching point to the service control point. In the call list service, a set of numbers are defined for subscriber B, i.e. for the called party, and an attempt is made to reach subscriber B by going through the numbers.

Referring to Figure 2, the service switching point receives a routing instruction B1 from the service control point in a Connect operation in step 201. The routing instruction may also be a number given by the caller, i.e. subscriber A. The service switching point checks if the call list service is involved in step 202. The switching point may be notified of the call list service in the Connect operation, for instance, which also transmits information on the service, in addition to the routing instruction. If the call list service is involved, it is checked if the number included in the routing instruction is the number of the voice mailbox in step 203. The checking is carried out by measures provided by the exchange and obvious to those skilled in the art, i.e. by analyzing, using parameter files, codes, and so on. If the routing instruction includes the voice mailbox number, then a special situation is detected in step 204, and a new routing instruction is requested in step 205. The service control point gives a new routing instruction in accordance with service logic. If the call list service is involved, the routing instruction may be an instruction requested from the caller, i.e. subscriber A, or the next number in turn in the call list. A routing instruction B2 is received at the service switching point in step 206. Next, it is checked if the routing instruction B2 is the same as the routing instruction B1 in step 207. Generally, if a Connect operation is received in step 206, then a different number is involved, and if a Continue operation is received in step 206, then the routing proceeds in accordance with the received routing instruction in step 201. If it is detected that the routing instruction is the same in step 207, the call is routed in step 208 and a connection is set up in step 209. If a different number is involved, then the routine returns from step 207 back to step 203 to check if the number in the routing instruction is the voice mailbox number. In other embodiments, the checking of step 207 can be fully skipped and the routine proceeds directly from step 206 to step 208.

If it is detected that the voice mailbox number is not involved in step 203, or if it is detected that the call list service is not involved in step 202, the routine proceeds to step 208 to route the call. The routine proceeds therefrom by setting up a connection in step 209.

In a first preferred embodiment of the invention, a special character is received from subscriber A at the service switching point upon connection set-up in step 210. The special character is received because the voice mailbox is located in another exchange behind the telephone network, for example, and the switching point cannot therefore recognize it. In that case, the caller, i.e. subscriber A has received an instruction in a welcoming message of the voice mailbox VMB, for example, according to which the caller can attempt to reach the called party by dialling the special character upon reception of the message, in case the caller does not want to leave a voice message. The special character is so defined that the reception of the special character leads to the detection of a special situation in step 211. Next, in step 212 the connection is released from the service switching point to the point according to the routing instruction B2. The connection is maintained from the service switching point to the caller, i.e. subscriber A. In other words, the connection set-up in step 209 is released. A new routing instruction is requested from the service control point in step 213. The service control point gives a new routing instruction according to service logic. If the call list service is involved, the routing instruction can be either an instruction requested from the caller, i.e. subscriber A or the next number in turn in the call list. A routing instruction B3 is received in step 214, the call is routed in step 215 and a connection is set-up in step 216. In another embodiment, the routine may proceed from step 214 to step 207 and from there onwards as described above.

The above embodiment and its alternatives can be divided into two independent embodiments, of which one or the other is used. Steps 201 to 209 can be made into an independent embodiment as well as steps 208 to 216.

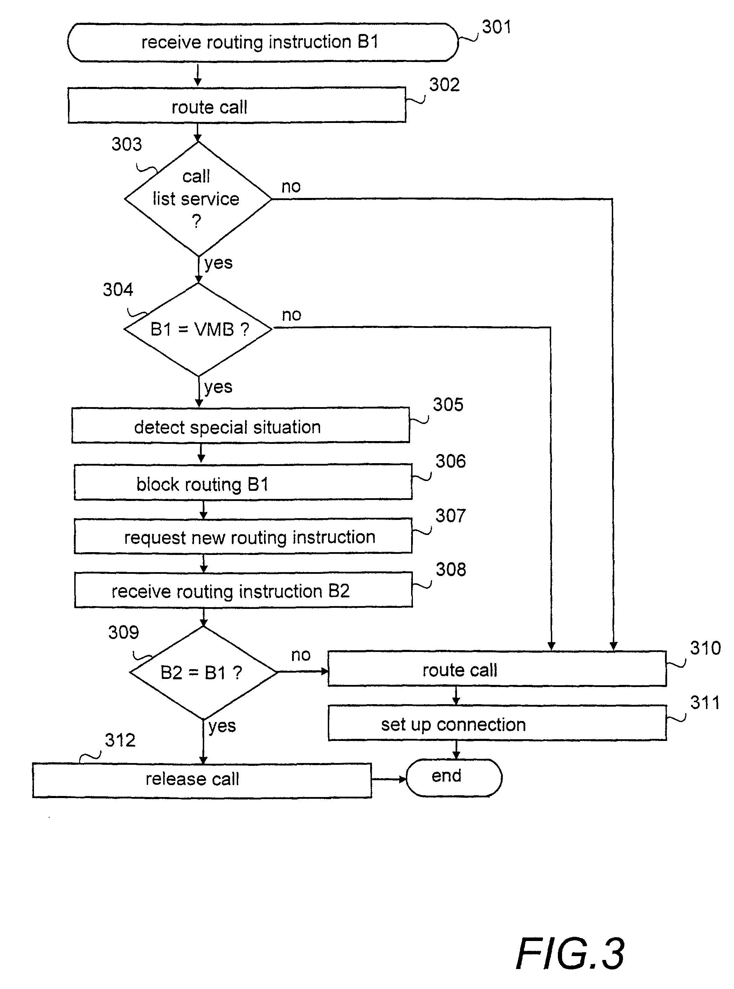

Figure 3 shows a flow diagram of a second preferred embodiment of the invention at a service switching point SSP. It is also assumed therein that instead of giving a call release command, a service control point gives routing instructions, and that connection set-up is successful, i.e. the call will be answered. Similarly, a call list service which comprises a special situation of routing the call to the voice mailbox VMB and the corresponding instruction is used as an example of a service.

Referring to Figure 3, the service switching point receives a routing instruction B1 from the service control point or the caller, i.e. subscriber A in a Connect operation in step 301 and routes the call in step 302. Next, the service switching point checks if the call list service is involved in step 303. The switching point may be notified of the call list service in the Connect operation, for example, which also transmits information on the service, in addition to the routing instruction. If the call list service is involved, it is checked if the number in the routing instruction is a voice mailbox number in step 304. The checking is carried out in the manner described in connection with Figure 2. If the routing instruction includes the voice mailbox number, then a special situation is detected in step 305, the routing thereto is blocked in step 306 and a new routing instruction is requested in step 307. The service control point gives a new routing instruction according to service logic. If a voice list service is involved, the routing instruction may be either an instruction requested from the caller, i.e. subscriber A or the next number in the call list. A routing instruction B2 is received at the service switching point in step 308. Next, it is checked if the routing instruction B2 is the same as the routing instruction B1 in step 308. Generally, if a Connect operation is received in step 308, a different number is involved, and if a Continue operation is received in step 308, the routing proceeds according to the routing instruction received in step 301. If it is detected that the routing instruction is the same in step 309, then the call is released, since the routing thereto was blocked in step 306. If a different number is involved, the routine proceeds from step 309 to step 310 to route the call, and the routine proceeds therefrom by setting up a connection in step 311. In other embodiments, the routine may return from step 309 to step 304, if the numbers in the routing instructions differ from each other.

If it is detected that the voice mailbox number is not involved in step 304 or if it is detected that the call list service is not involved in step 303, the routine proceeds to step 310 to route the call and continues therefrom by setting up a connection in step 311.

In a preferred embodiment, it is checked if the call list service is involved after step 308. If so, the routine proceeds to step 309 and continues therefrom. Correspondingly, if not so, the routine proceeds directly to step 310 and continues therefrom. In this embodiment, the control point may announce that the special situation is no longer checked either in a separate operation or in an operation comprising the routing instruction B2, in other words, the SCP can change the service type to 'not a call list' and thus allow routing of any kind. An advantage of this is that while going through the call list, the SCP is able to change the detection instruction of a special situation by accepting the routing of the last number of the call list, for example.

Steps 210 to 216 of the embodiment presented in Figure 2 could be annexed to the embodiment presented in Figure 3.

The flow diagrams presented above in Figures 2 and 3 illustrate the invention, and the principles described therein can also be used in services other than the call list services. The checkings that are carried out and their locations in the flow diagram naturally depend on how the special situations have been defined and with which they are associated. The service can also be announced indirectly by arming a detection point for a special situation in a RequestReportBSCMEvent operation, for instance, the encounter of which leads to a similar result. As distinct from the idea presented in the figure, a call release command could also be received as a new routing instruction. Upon requesting the instruction, call control is transferred to the service control point and, correspondingly, reception of the routing instruction transfers call control back to the service point in both figures.

As distinct from Figures 2 and 3, a call release command stored at the service switching point or a new routing instruction to which a call is always routed upon the detection of a special situation of a service could also serve as an instruction for a special situation. Such a routing instruction could be 'route to a maintenance centre' or 'route to a voice mailbox in a normal way'. In such instructions there is no need to transfer call control to the service control point, but the call control is maintained at the switching point all the time.

Figure 4 illustrates a service switching point SSP and its functions essential to the invention. The SSP can be implemented in conventional exchanges, provided that it is ensured that the exchange is able to separate basic call control from service control. The service switching point SSP comprises an exchange terminal SSP-ET for receiving signalling from and transmitting signalling to other network nodes, and an application part SSP-AP that controls the exchange terminal. The application part SSP-AP comprises the actual functions of an exchange, i.e. the service switching function SSF and the call control function CCF possibly together with the CCAF, depending on the type of exchange. These functions are described in more detail in connection with Figure 1. The application part SSP-AP comprises a call-specific basic call state model BCSM which is described above in the general description, and finite state model instances (SSF-FSM). When an intelligent network service is required, the call is provided with the SSF-FSM for a SCP connection, the SSF-FSM transmitting call handling instructions between the BCSM and the SCP. Upon completion of the intelligent network service, the SSF-FSM is terminated. The same basic call state model BCSM may require a new intelligent network service at some other call set-up phase. In that case, the BCSM is provided with a new finite state model instance SSF-FSM. The finite state model instances SSF-FSMs associated with the calls may occur concurrently and asynchronously.

The application part SSP-AP comprises a service switching management entity (SSME) for executing the operations received from the intelligent network service control point, responding to the operations and requesting instructions. The service switching management entity SSME comprises an SSME control (SSME-C) for maintaining a dialogue on behalf of the finite state model instances SSF-FSMs between other parts of the switching point and other network nodes and functions of the intelligent network, such as the service control point. It is responsible for creating, activating and maintaining the finite state model instances SSF-FSMs. The SSME-C directs the received operation to the correct instance and creates the instance, if necessary.

In the first and second preferred embodiments of the invention the application part SSP-AP comprises a memory M for storing a service and a definition for a special situation and an instruction associated with the service. In addition, in the first preferred embodiment of the invention special characters are stored in the memory, the reception of which leads to the detection of a special situation. The application part SSP-AP of the switching point is responsible for the tasks or some of the tasks described in connection with Figures 2 and 3, depending on the embodiment.

Figure 5 illustrates a service control point SCP and its functions essential to the invention. The SCP comprises at least a terminal part SCP-ET for receiving signalling from and transmitting signalling to other network nodes, and an application part SCP-AP which controls the terminal part.

The application part SCP-AP comprises at least one service logic program SLP which is used for producing intelligent network services and for which a special situation exists, and a service control function SCF which is described in connection with Figure 1. In addition, the application part SCP-AP. comprises call state model instances (SCF SCSM). Each service request in the intelligent network creates a call state model instance SCSM according to the service logic program. On behalf of the service logic program SLP of the intelligent network, the SCSM maintains a dialogue between the SSF, regarding the particular call service which created the call state model instance SCSM. The call state model instances SCSMs associated with the call may occur concurrently and asynchronously. In addition, the application part SCP-AP comprises a service control management entity (SCME) with a SCME control (SCME-C) for transmitting operations to the service switching point. The SCME-C is responsible for taking in a centralized manner care of a dialogue between all call state model instances SCSMs associated with intelligent network services and other parts of the control point and other network nodes in the intelligent network, such as the service switching point SSP and the service data function SDF. It is responsible for creating, activating and maintaining the call state model instances SCSMs.

In the embodiments of the invention, the application part SCP-AP comprises a software routine (not shown in the figure) which makes sure that the SCSM is able to recognize the operation indicating a special situation, operate according to service logic and the special situation and give new routing instructions which can also be release instructions. In some embodiments, such as the first and the second embodiments, the software routine also makes sure that the SCSM adds to an operation information that the service is a service for which a special situation has been defined. In embodiments in which the service logic expects that the checking of the special situation is finished before the checking of the next routing instruction starts, the software routine makes sure that information on this is added either to an operation or is transmitted as a specific operation.

It is to be understood that the above description and the related figures are only intended to illustrate the present invention. It will be apparent to those skilled in the art that many variations and modifications can be made to the invention without departing from the scope and spirit of the invention disclosed in the attached claims.

## Claims

1. A method of handling a special situation of an intelligent network service which gives call-related instructions to a service switching point of the intelligent network via a service control point of the intelligent network, **characterized by** comprising the following steps of:
defining for the service at least one special situation which is failed for the service but successful for the switching point,
defining an instruction for said at least one special situation,
receiving at the switching point a message indicating the existence of the call-related service for which the special situation has been defined,
receiving at the switching point a first routing instruction (201, 301) either from a caller or the control point,
checking said first routing instruction (203, 304),
detecting the special situation (204, 305) if the first routing instruction includes the special situation, and
following said instruction in response to the detection of the special situation.

2. A method as claimed in claim 1, **characterized in that** said instruction comprises the following steps of:
requesting a second routing instruction (205, 307) in response to the detection of the special situation, and
transferring call control to the service control point.

3. A method as claimed in claim 2, **characterized in that** the method further comprises the following steps of:
receiving from the control point a cancelling message indicating that the special situation associated with the call is no longer checked,
receiving the second routing instruction, and
routing the call according to said second routing instruction.

4. A method of handling an intelligent network service, the intelligent network comprising a service control point and a service switching point, and in which method a call is connected according to a first routing instruction, **characterized by** further comprising the following steps of:
defining an interrupt character by means of which a caller of the call that invoked the service can indicate a special situation which is failed for the caller but successful for the switching point,
receiving the interrupt character (210) at the switching point,
detecting the special situation (211) in response to the interrupt character received,
requesting a second routing instruction (213) in response to the detection of the special situation, and
transferring call control to the service control point.

5. A method as claimed in claim 4, **characterized in that** in response to the second routing instruction
the portion of the connected call which originates from the service switching point (212) is released, and
call connection set-up is continued in accordance with the second routing instruction at the service switching point.

6. An intelligent network (IN) comprising a service switching point (SSP) for connecting the intelligent network to other telecommunications networks and a service control point (SCP) for producing services in the intelligent network, **characterized in that**
for the service is defined at least one special situation which is failed for the service but successful for the switching point,
an instruction has been defined for said at least one special situation, and
the service switching point (SSP) is arranged to detect the special situation and follow said instruction in response to the special situation.

7. An intelligent network as claimed in claim 6, **characterized in that** the service control point (SCP) is arranged to notify the service switching point (SSP) that the special situation has been defined for the service.

8. An intelligent network as claimed in claim 6 or 7, **characterized in that** the service switching point (SSP) is arranged to detect the special situation in response to a character (A1, A2) received from the terminal of the caller of the call that invoked the service and to transfer call control to the service control point (SCP) in response to the special situation.

9. An intelligent network as claimed in claim 6 or 7, **characterized in that**
the service control point (SCP) is arranged to notify the service switching point that the special situation of the service is no longer monitored, and
the service switching point (SSP) is arranged to interpret that the service does not have a special situation in response to said notification.

10. A service switching point (SSP) of an intelligent network, comprising an interface to a service control point of the intelligent network and to a public telecommunications network, reception means (SSF-FSM) for receiving instructions from the service control point, and routing means (CCF) for routing or releasing a call, **characterized in that** the switching point further comprises
memory means (M) for storing at least one definition for a special situation and its instruction for at least one service, the special situation being failed for the service but successful for the switching point,
checking means (SSP-AP) for checking if the routing instruction that is received from the control point or the caller leads to a special situation, and
function means (SSF-FSM, CCF) responsive to the checking means for carrying out the operation of the instruction.

11. A service switching point of an intelligent network as claimed in claim 10, **characterized in that** said instruction comprises call control transfer to the service control point.

12. A service switching point (SSP) of an intelligent network as claimed in claim 10, **characterized in that** said instruction includes call release.

13. A service switching point (SSP) of an intelligent network as claimed in claim 10, **characterized in that** said instruction includes a new routing instruction.

14. A service control point (SCP) of an intelligent network, comprising a connection to a service switching point, management means for controlling connection set-up of a call which uses an intelligent network service, and transmission means for transmitting instructions and dial information requests to the service switching point, **characterized in that**
for a control point service (SLP) is defined at least one special situation which is failed for the service but successful for connection set-up,
the control point comprises reception means (SCME-C) for receiving a situation message indicating the special situation, and
management means (SCSM) are arranged to give new connection set-up instructions in response to the situation message.

15. A control point as claimed in claim 14, **characterized in that** the management means (SCSM) are arranged to indicate to the switching point that a service for which at least one special situation has been defined is associated with the call.

16. A control point as claimed in claim 14, **characterized in that**
the special situation relates to a connection already set up, and
in response to the special situation, the management means (SCSM) are further arranged to give a release instruction to the portion of the set-up connection that originates from the switching point.

## Patentansprüche

1. Verfahren zum Handhaben einer speziellen Situation eines Dienstes eines intelligenten Netzwerks, der Anruf-bezogene Anweisungen über eine Dienst-Steuerstelle des intelligenten Netzwerks an eine Dienst-Vermittlungsstelle des intelligenten Netzwerks gibt, **gekennzeichnet durch** die folgenden Schritte:
- Definieren von mindestens einer speziellen Situation für den Dienst, die für den Dienst fehlgeschlagen, aber für die Vermittlungsstelle erfolgreich ist;
- Definieren einer Anweisung für die mindestens eine spezielle Situation;
- Empfangen einer Nachricht an der Vermittlungsstelle, welche das Vorhandensein des Anruf-bezogenen Dienstes angibt, für den die spezielle Situation definiert worden ist;
- Empfangen einer ersten Routing-Anweisung (201, 301) an der Vermittlungsstelle, entweder von einem Anrufer oder der Steuerstelle;
- Prüfen der ersten Routing-Anweisung (203, 304);
- Erfassen der speziellen Situation (204, 305), wenn die erste Routing-Anweisung die spezielle Situation einschließt; und
- Befolgen der Anweisung in Reaktion auf das Erfassen der speziellen Situation.

2. Verfahren nach Anspruch 1, **dadurch gekennzeichnet, dass** die Anweisung die folgenden Schritte aufweist:
- Anfordern einer zweiten Routing-Anweisung (205, 307) in Reaktion auf das Erfassen der speziellen Situation; und
- Übertragen der Anrufsteuerung an die Dienst-Steuerstelle.

3. Verfahren nach Anspruch 2, **dadurch gekennzeichnet, dass** das Verfahren weiter die folgenden Schritte umfasst:
- Empfangen einer Zurücknahme-Nachricht von der Steuerstelle, welche angibt, dass die spezielle Situation, die mit dem Anruf in Verbindung steht, nicht länger geprüft wird;
- Empfangen der zweiten Routing-Anweisung; und
- Ausführen des Routings des Anrufs gemäß der zweiten Routing-Anweisung.

4. Verfahren zur Handhabung eines Dienstes eines intelligenten Netzwerks, wobei das intelligente Netzwerk eine Dienst-Steuerstelle und eine Dienst-Vermittlungsstelle aufweist, und wobei bei dem Verfahren ein Anruf gemäß einer ersten Routing-Anweisung verbunden wird, **dadurch gekennzeichnet, dass** es weiter die folgenden Schritte umfasst:
- Definieren eines Unterbrechungs-Zeichens, mittels dem ein Anrufer des Anrufs, der den Dienst aufgerufen hat, eine spezielle Situation angeben kann, die für den Anrufer fehlgeschlagen, aber für die Vermittlungsstelle erfolgreich ist;
- Empfangen des Unterbrechungs-Zeichens (210) an der Vermittlungsstelle;
- Erfassen der speziellen Situation (211) in Reaktion auf das empfangene Unterbrechungs-Zeichen;
- Anfordern einer zweiten Routing-Anweisung (213) in Reaktion auf die Erfassung der speziellen Situation; und
- Übertragen der Anrufsteuerung an die Dienst-Steuerstelle.

5. Verfahren nach Anspruch 4, **dadurch gekennzeichnet, dass** in Reaktion auf die zweite Routing-Anweisung
- der Anteil des verbundenen Anrufs, der von der Dienst-Vermittlungsstelle ausgeht, freigegeben wird (212); und
- der Aufbau der Anrufverbindung an der Dienst-Vermittlungsstelle gemäß der zweiten Routing-Anweisung fortgesetzt wird.

6. Intelligentes Netzwerk (IN), umfassend eine Dienst-Vermittlungsstelle (SSP), um das intelligente Netzwerk mit anderen Telekommunikationsnetzwerken zu verbinden, und eine Dienst-Steuerstelle (SCP), um Dienste in dem intelligenten Netzwerk zu erzeugen, **dadurch gekennzeichnet, dass**
- für den Dienst mindestens eine spezielle Situation definiert ist, die für den Dienst fehlgeschlagen, aber für die Vermittlungsstelle erfolgreich ist;
- eine Anweisung für die mindestens eine spezielle Situation definiert worden ist; und
- der Dienst-Vermittlungsstelle (SSP) eingerichtet ist, um die spezielle Situation zu erfassen und um in Reaktion auf die spezielle Situation die Anweisung zu befolgen.

7. Intelligentes Netzwerk nach Anspruch 6, **dadurch gekennzeichnet, dass** die Dienst-Steuerstelle (SCP) eingerichtet ist, um die Dienst-Vermittlungsstelle (SSP) zu benachrichtigen, dass die spezielle Situation für den Dienst definiert worden ist.

8. Intelligentes Netzwerk nach Anspruch 6 oder 7, **dadurch gekennzeichnet, dass** die Dienst-Vermittlungsstelle (SSP) eingerichtet ist, um die spezielle Situation in Reaktion auf ein Zeichen (A1, A2) zu erfassen, das von dem Endgerät des Anrufers des Anrufs empfangen wird, der den Dienst aufgerufen hat, und um in Reaktion auf die spezielle Situation die Anrufsteuerung zu der Dienst-Steuerstelle (SCP) zu übertragen.

9. Intelligentes Netzwerk nach Anspruch 6 oder 7, **dadurch gekennzeichnet, dass**
- die Dienst-Steuerstelle (SCP) eingerichtet ist, um die Dienst-Vermittlungsstelle (SSP) zu benachrichtigen, dass die spezielle Situation des Dienstes nicht länger überwacht wird; und
- die Dienst-Vermittlungsstelle (SSP) eingerichtet ist, um in Reaktion auf die Benachrichtigung zu interpretieren, dass der Dienst keine spezielle Situation aufweist.

10. Dienst-Vermittlungsstelle (SSP) eines intelligenten Netzwerks, umfassend eine Schnittstelle zu einer Dienst-Steuerstelle des intelligenten Netzwerks und zu einem öffentlichen Telekommunikationsnetzwerk, Empfangsmittel (SSF-FSM) zum Empfangen von Anweisungen von der Dienst-Steuerstelle, und Routingmittel (CCF) zum Ausführen von Routing oder Freigeben eines Anrufs, **dadurch gekennzeichnet, dass** die Vermittlungsstelle weiter umfasst
- Speichermittel (M) zum Speichern von mindestens einer Definition für eine spezielle Situation und ihrer Anweisung für mindestens einen Dienst, wobei die spezielle Situation für den Dienst fehlgeschlagen, aber für die Vermittlungsstelle erfolgreich ist;
- Prüfmittel (SSP-AP) zum Prüfen, ob die Routing-Anweisung, die von der Steuerstelle oder dem Anrufer empfangen wird, zu einer speziellen Situation führt; und
- Funktionsmittel (SSF-FSM, CCF), die auf die Prüfmittel reagieren, um den Vorgang der Anweisung auszuführen.

11. Dienst-Vermittlungsstelle eines intelligenten Netzwerks nach Anspruch 10, **dadurch gekennzeichnet, dass** die Anweisung eine Übertragung der Anrufsteuerung an die Dienststeuerstelle umfasst.

12. Dienst-Vermittlungsstelle (SSP) eines intelligenten Netzwerks nach Anspruch 10, **dadurch gekennzeichnet, dass** die Anweisung eine Anruffreigabe umfasst.

13. Dienst-Vermittlungsstelle (SSP) eines intelligenten Netzwerks nach Anspruch 10, **dadurch gekennzeichnet, dass** die Anweisung eine neue Routing-Anweisung einschließt.

14. Dienst-Steuerstelle (SCP) eines intelligenten Netzwerks, umfassend eine Verbindung zu einer Dienst-Vermittlungsstelle, Verwaltungsmittel zum Steuern des Verbindungsaufbaus eines Anrufs, der ein intelligentes Netzwerk verwendet, und Sendemittel zum Senden von Anweisungen und Wählinformationsanfragen an die Dienst-Vermittlungsstelle, **dadurch gekennzeichnet, dass**
- für einen Steuerstelle-Dienst (SLP) mindestens eine spezielle Situation definiert ist, die für den Dienst fehlgeschlagen, aber für den Verbindungsaufbau erfolgreich ist;
- die Steuerstelle Empfangsmittel (SCME-C) zum Empfangen einer Situationsnachricht aufweist, welche die spezielle Situation angibt; und
- Verwaltungsmittel (SCSM) eingerichtet sind, um in Reaktion auf die Situationsnachricht neue Verbindungsaufbauanweisungen zu geben.

15. Steuerstelle nach Anspruch 14, **dadurch gekennzeichnet, dass** die Verwaltungsmittel (SCSM) eingerichtet sind, um der Vermittlungsstelle anzugeben, dass ein Dienst, für den mindestens eine spezielle Situation definiert worden ist, mit dem Anruf in Zusammenhang steht.

16. Steuerstelle nach Anspruch 14, **dadurch gekennzeichnet, dass**
- die spezielle Situation sich auf eine Verbindung bezieht, die bereits aufgebaut ist; und
- die Verwaltungsmittel (SCSM) weiter eingerichtet sind, um in Reaktion auf die spezielle Situation eine Freigabeanweisung an den Anteil der Aufbauverbindung zu geben, der von der Vermittlungsstelle ausgeht.

## Revendications

1. Procédé de gestion d'une situation spéciale d'un service de réseau intelligent qui donne des instructions en rapport avec un appel à un commutateur d'accès aux services du réseau intelligent par l'intermédiaire d'un point de commande de services du réseau intelligent, **caractérisé en ce qu'**il comprend les étapes suivantes consistant à :
définir, pour le service, au moins une situation spéciale qui est un échec pour le service mais un succès pour le commutateur d'accès,
définir une instruction pour ladite au moins une situation spéciale,
recevoir, au niveau du commutateur d'accès, un message indiquant l'existence du service en rapport avec un appel pour lequel la situation spéciale a été définie,
recevoir, au niveau du commutateur d'accès, une première instruction d'acheminement (201, 301) soit d'un appelant, soit du point de commande,
vérifier ladite première instruction d'acheminement (203, 304),
détecter la situation spéciale (204, 305) si la première instruction d'acheminement comprend la situation spéciale, et
suivre ladite instruction en réponse à la détection de la situation spéciale.

2. Procédé selon la revendication 1, **caractérisé en ce que** ladite instruction comprend les étapes suivantes consistant à :
demander une deuxième instruction d'acheminement (205, 307) en réponse à la détection de la situation spéciale, et
transférer le contrôle d'appel au point de commande de services.

3. Procédé selon la revendication 2, **caractérisé en ce que** le procédé comprend, en outre, les étapes suivantes consistant à :
recevoir, du point de commande, un message d'annulation indiquant que la situation spéciale associée à l'appel n'est plus vérifiée,
recevoir la deuxième instruction d'acheminement, et
acheminer l'appel conformément à ladite deuxième instruction d'acheminement.

4. Procédé de gestion d'un service de réseau intelligent, le réseau intelligent comprenant un point de commande de services et un commutateur d'accès aux services, et dans lequel procédé un appel est connecté conformément à une première instruction d'acheminement, **caractérisé en ce qu'**il comprend, en outre, les étapes consistant à :
définir un caractère d'interruption au moyen duquel un appelant de l'appel qui a invoqué le service peut indiquer une situation spéciale qui est un échec pour l'appelant mais un succès pour le commutateur d'accès,
recevoir le caractère d'interruption (210) au niveau du commutateur d'accès,
détecter la situation spéciale (211) en réponse au caractère d'interruption reçu,
demander une deuxième instruction d'acheminement (213) en réponse à la détection de la situation spéciale, et
transférer le contrôle d'appel au point de commande de services.

5. Procédé selon la revendication 4, **caractérisé en ce que**, en réponse à la deuxième instruction d'acheminement,
la partie de l'appel connecté qui provient du commutateur d'accès aux services (212) est libérée, et
un établissement de connexion d'appel est poursuivi conformément à la deuxième instruction d'acheminement au niveau du commutateur d'accès aux services.

6. Réseau intelligent (IN) comprenant un commutateur d'accès aux services (SSP) pour connecter le réseau intelligent à d'autres réseaux de télécommunication et un point de commande de services (SCP) pour produire des services dans le réseau intelligent, **caractérisé en ce que**
pour le service, au moins une situation spéciale qui est un échec pour le service mais un succès pour le commutateur d'accès est définie,
une instruction a été définie pour ladite au moins une situation spéciale, et
le commutateur d'accès aux services (SSP) est agencé pour détecter la situation spéciale et suivre ladite instruction en réponse à la situation spéciale.

7. Réseau intelligent selon la revendication 6, **caractérisé en ce que** le point de commande de services (SCP) est agencé pour notifier au commutateur d'accès aux services (SSP) que la situation spéciale a été définie pour le service.

8. Réseau intelligent selon la revendication 6 ou 7, **caractérisé en ce que** le commutateur d'accès aux services (SSP) est agencé pour détecter la situation spéciale en réponse à un caractère (A1, A2) reçu du terminal de l'appelant de l'appel qui a invoqué le service et pour transférer le contrôle d'appel au point de commande de services (SCP) en réponse à la situation spéciale.

9. Réseau intelligent selon la revendication 6 ou 7, **caractérisé en ce que**
le point de commande de services (SCP) est agencé pour notifier au commutateur d'accès aux services que la situation spéciale du service n'est plus surveillée, et
le commutateur d'accès aux services (SSP) est agencé pour interpréter que le service n'a pas de situation spéciale en réponse à ladite notification.

10. Commutateur d'accès aux services (SSP) d'un réseau intelligent, comprenant une interface vers un point de commande de services du réseau intelligent et vers un réseau de télécommunication public, des moyens de réception (SSF-FSM) pour recevoir des instructions du point de commande de services, et des moyens d'acheminement (CCF) pour acheminer ou libérer un appel, **caractérisé en ce que** le commutateur d'accès comprend en outre :
des moyens formant mémoire (M) pour mémoriser au moins une définition pour une situation spéciale et son instruction pour au moins un service, la situation spéciale étant un échec pour le service mais un succès pour le commutateur d'accès,
des moyens de vérification (SSP-AP) pour vérifier si l'instruction d'acheminement qui est reçue du point de commande ou de l'appelant conduit à une situation spéciale, et
des moyens formant fonction (SSF-FSM, CCF) sensibles aux moyens de vérification pour effectuer l'opération de l'instruction.

11. Commutateur d'accès aux services (SSP) d'un réseau intelligent selon la revendication 10, **caractérisé en ce que** ladite instruction comprend un transfert de contrôle d'appel au point de commande de services.

12. Commutateur d'accès aux services (SSP) d'un réseau intelligent selon la revendication 10, **caractérisé en ce que** ladite instruction comprend une libération d'appel.

13. Commutateur d'accès aux services (SSP) d'un réseau intelligent selon la revendication 10, **caractérisé en ce que** ladite instruction comprend une nouvelle instruction d'acheminement.

14. Point de commande de services (SCP) d'un réseau intelligent, comprenant une connexion à un commutateur d'accès aux services, des moyens de gestion pour contrôler l'établissement de connexion d'un appel qui utilise un service de réseau intelligent, et des moyens d'émission pour émettre des instructions et des demandes d'informations de numérotation vers le commutateur d'accès aux services, **caractérisé en ce que**
pour un service de point de commande (SLP), au moins une situation spéciale qui est un échec pour le service mais un succès pour l'établissement de connexion est définie,
le point de commande comprend des moyens de réception (SCME-C) pour recevoir un message de situation indiquant la situation spéciale, et
des moyens de gestion (SCSM) sont agencés pour donner de nouvelles instructions d'établissement de connexion en réponse au message de situation.

15. Point de commande selon la revendication 14, **caractérisé en ce que** les moyens de gestion (SCSM) sont agencés pour indiquer au commutateur d'accès qu'un service pour lequel au moins une situation spéciale a été définie est associé à l'appel.

16. Point de commande selon la revendication 14, **caractérisé en ce que**
la situation spéciale concerne une connexion déjà établie, et
en réponse à la situation spéciale, les moyens de gestion (SCSM) sont, en outre, agencés pour donner une instruction de libération à la partie de la connexion d'établissement qui provient du commutateur d'accès.
